# EUROPEAN PATENT APPLICATION

(11) **EP 4 819 044 A1**
(43) Date of publication of application: **07.10.2026**
(21) Application number: 24899074.9
(22) Date of filing: 04.03.2024
(51) Int. Cl.: G06T 7/70

(54) **METHOD AND APPARATUS FOR GENERATING GLOBAL MAP VECTOR FRAGMENTS**

(30) Priority: 05.12.2023 CN 202311654261
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: DU, Weisong, Hangzhou, Zhejiang 310051 (CN); GONG, Dezhi, Hangzhou, Zhejiang 310051 (CN); WEN, Weijin, Hangzhou, Zhejiang 310051 (CN)
(74) Representative: Murgitroyd & Company
(86) International application number: PCT/CN2024/079846
(87) International publication number: WO 2025/118419

(57) **Abstract**

The present disclosure discloses a method for generating a global map vector segment and a related apparatus, and relates to the technical field of intelligent driving. In present disclosure, the method includes: performing pose matching on the local map vector segments based on the global poses and global timestamps respectively corresponding to the global poses, to obtain a respective pose matching pair sequence for each of the local map vector segments; then, determining a respective target transformation matrix corresponding to each of the local map vector segments based on the obtained pose matching pair sequences; and finally, acquiring a respective global map vector segment corresponding to each of the local map vector segments based on the local map vector segments and target transformation matrices respectively corresponding to the local map vector segments. In this way, information within the local map vector segments and information between the local map vector segments (i.e., the target transformation matrix) are utilized to generate the global map vector segments, thereby improving the efficiency and accuracy of generating the global map vector segments.

## Description

### TECHNICAL FIELD

The present disclosure relates to the technical field of intelligent driving, and in particular, to a method for generating a global map vector segment and an apparatus therefor.

### BACKGROUND

The high-definition map (HD map), as one of the key enablers for autonomous driving, can provide lane-level planning within road segments and ego-vehicle localization assistance for autonomous driving vehicles.

### SUMMARY

Embodiments of the present disclosure provide a method for generating a global map vector segment and an apparatus therefor.

According to a first aspect, an embodiment of the present disclosure provides a method for generating a global map vector segment, where the method includes:
obtaining global pose data and local map data of a vehicle in a target scene, where the global pose data includes global poses of the vehicle in a standard coordinate reference system, the local map data includes local map vector segments, and each local map vector segment includes at least one local pose of the vehicle in a local coordinate reference system;
performing pose matching on the local map vector segments based on the global poses and global timestamps respectively corresponding to the global poses, to obtain respective pose matching pair sequences for the local map vector segments;
determining a respective target transformation matrix corresponding to each of the local map vector segments based on the obtained pose matching pair sequences, where for each target transformation matrix, the target transformation matrix is configured to ensure that a pose coincidence degree between at least one candidate global pose and at least one target global pose meets a set pose coincidence requirement; the at least one candidate global pose corresponds to the at least one local pose in the local map vector segment corresponding to the target transformation matrix; the at least one target global pose is among the global poses and corresponds to the at least one local pose; and the at least one candidate global pose is obtained by transforming the at least one local pose in the local map vector segment corresponding to the target transformation matrix into the standard coordinate reference system; and
acquiring a respective global map vector segment corresponding to each of the local map vector segments based on the local map vector segments and target transformation matrices respectively corresponding to the local map vector segments.

According to a second aspect, an embodiment of the present disclosure further provides an apparatus for generating a global map vector segment, where the apparatus includes:
an obtaining module, configured to: obtain global pose data and local map data of a vehicle in a target scene, where the global pose data includes global poses of the vehicle in a standard coordinate reference system, the local map data includes local map vector segments, and each local map vector segment includes at least one local pose of the vehicle in a local coordinate reference system;
a matching module, configured to: pose matching on the local map vector segments based on the global poses and global timestamps respectively corresponding to the global poses, to obtain respective pose matching pair sequences for the local map vector segments;
a determining module, configured to: determine a respective target transformation matrix corresponding to each of the local map vector segments based on the obtained pose matching pair sequences, where for each target transformation matrix, the target transformation matrix is configured to ensure that a pose coincidence degree between at least one candidate global pose and at least one target global pose meets a set pose coincidence requirement; the at least one candidate global pose corresponds to the at least one local pose in the local map vector segment corresponding to the target transformation matrix; the at least one target global pose is among the global poses and corresponds to the at least one local pose; and the at least one candidate global pose is obtained by transforming the at least one local pose in the local map vector segment corresponding to the target transformation matrix into the standard coordinate reference system; and
a generation module, configured to: acquire a respective global map vector segment corresponding to each of the local map vector segments based on the local map vector segments and target transformation matrices respectively corresponding to the local map vector segments.

In an embodiment, when performing pose matching on the local map vector segments based on the global poses and global timestamps respectively corresponding to the global poses, the matching module is specifically configured to:
for each local map vector segment of the local map vector segments, perform the following operations including:
obtaining at least one local timestamp respectively corresponding to the at least one local pose in the local map vector segment; and
for each local timestamp, in response to determining that a global timestamp among the global timestamps is the same as the local timestamp, determining the global pose and the local pose respectively corresponding to the local timestamp as a pose matching pair.

In an embodiment, the matching module is further configured to:
in response to determining that none of the global timestamps is the same as the local timestamp, obtain two global timestamps adjacent to the local timestamp from the global timestamps; and
based on the two global timestamps, global poses respectively corresponding to the two global timestamps, and the local timestamp, obtain a global pose corresponding to the local timestamp, and determine the global pose and the local pose respectively corresponding to the local timestamp as a pose matching pair.

In an embodiment, when determining a respective target transformation matrix corresponding to each of the local map vector segments based on the obtained pose matching pair sequences, the determining module is specifically configured to:
for each pose matching pair sequence of the pose matching pair sequences, perform following operations including:
obtaining a next pose matching pair sequence temporally adjacent to a local timestamp corresponding to a sequence tail in the pose matching pair sequence;
based on the pose matching pair sequence and a first transformation matrix associated with the pose matching pair sequence, and the next pose matching pair sequence and a second transformation matrix associated with the next pose matching pair sequence, obtaining an initial joint pose coincidence degree corresponding to the pose matching pair sequence and the next pose matching pair sequence;
based on gradient information for multi-degree-of-freedom poses corresponding to the initial joint pose coincidence degree, iteratively modifying the first transformation matrix and the second transformation matrix until a target joint pose coincidence degree obtained based on a modified first transformation matrix and a modified second transformation matrix satisfies a preset joint pose coincidence degree condition; and
determining the modified first transformation matrix and the modified second transformation matrix as target transformation matrices respectively corresponding to the pose matching pair sequence and the next pose matching pair sequence.

In an embodiment, when based on the pose matching pair sequence and a first transformation matrix associated with the pose matching pair sequence, and the next pose matching pair sequence and a second transformation matrix associated with the next pose matching pair sequence, obtaining the initial joint pose coincidence degree corresponding to the pose matching pair sequence and the next pose matching pair sequence, the determining module is specifically configured to:
based on pose matching pairs included in the pose matching pair sequence and the first transformation matrix, obtain a first sequence pose coincidence degree; and based on pose matching pairs included in the next pose matching pair sequence and the second transformation matrix, obtain a second sequence pose coincidence degree;
based on the local pose of the sequence tail in the pose matching pair sequence, the local pose of the sequence head in the next pose matching pair sequence, the first transformation matrix, and the second transformation matrix, obtain a sub-initial joint pose coincidence degree; and
based on the first sequence pose coincidence degree, the second sequence pose coincidence degree, and the sub-initial joint pose coincidence degree, obtain the initial joint pose coincidence degree.

In an embodiment, determining that the target joint pose coincidence degree obtained based on the modified first transformation matrix and the modified second transformation matrix satisfies the preset joint pose coincidence degree condition in response to determining that the following condition is satisfied:
obtaining multi-degree-of-freedom poses respectively corresponding to the modified first transformation matrix and the modified second transformation matrix; and
in response to determining that for each of the multi-degree-of-freedom poses, the multi-degree-of-freedom pose falls within pose intervals associated with the multi-degree-of-freedom pose, determining the target joint pose coincidence degree satisfies the joint pose coincidence degree condition, where each pose interval is set according to gradient information for a respective degree of freedom of a pose.

According to a third aspect, an electronic device is provided, including: a memory and at least one processor, where the memory stores program code that, when executed by the at least one processor, causes the at least one processor to perform the steps of the method for generating a global map vector segment according to the above first aspect.

According to a fourth aspect, a computer-readable storage medium is provided, including program code, where when the program code is run on an electronic device, the program code is configured to cause the electronic device to perform the steps of the method for generating a global map vector segment according to the above first aspect.

According to a fifth aspect, a computer program product is provided, where when the computer program product is invoked by a computer, the computer is enabled to perform the steps of the method for generating a global map vector segment according to the first aspect.

The present disclosure has the following beneficial effects:
In the method for generating a global map vector segment provided by the embodiment of the present application, pose matching is performed on the local map vector segments based on the global poses and global timestamps respectively corresponding to the global poses, to obtain a respective pose matching pair sequence for each of the local map vector segments; then, a respective target transformation matrix corresponding to each of the local map vector segments is determined based on the obtained pose matching pair sequences; and finally, a respective global map vector segment corresponding to each of the local map vector segments is acquired based on the local map vector segments and target transformation matrices respectively corresponding to the local map vector segments.

In this way, the information in the local map vector segment and the information between the local map vector segments (i.e., the target transformation matrix) are used to generate the global map vector segment, which avoids the disadvantages in the related art that the amount of data participating in the operation is large and the optimization efficiency is low due to the optimization of the vehicle perception result based on the coordinate points, and the accuracy of the generated global map vector segment cannot be ensured under the influence of the world coordinate error, thereby improving the efficiency and accuracy of generating the global map vector segment.

In addition, other features and advantages of the present disclosure will be set forth in the following description, and partially become apparent from the description, or be understood by implementing the present disclosure. The objectives and other advantages of the present disclosure may be achieved and obtained through the structures specifically pointed out in the written description, claims, and drawings.

### BRIEF DESCRIPTION OF DRAWINGS

In order to more clearly illustrate the technical solutions in the embodiments of the present disclosure, the drawings required to be used in the description of the embodiments will be briefly introduced below, and it is obvious that the drawings in the following description are only some embodiments of the present disclosure, and those skilled in the art can obtain other drawings according to these drawings without creative efforts. In the drawings:
FIG. 1 is an optional system architecture diagram applicable to an embodiment of the present disclosure;
FIG. 2 is an implementation flowchart of a method for generating a global map vector segment according to an embodiment of the present disclosure;
FIG. 3 is a diagram of a specific application scenario of matching a local pose and a global pose according to an embodiment of the present disclosure;
FIG. 4 is a diagram of a specific application scenario of matching a local pose and a global pose according to an embodiment of the present disclosure;
FIG. 5 is a diagram of a specific application scenario based on FIG. 3 and FIG. 4 according to an embodiment of the present disclosure;
FIG. 6 is an implementation flowchart of a method for obtaining a target transformation matrix according to an embodiment of the present disclosure;
FIG. 7 is a logical diagram of obtaining an initial joint pose coincidence degree according to an embodiment of the present disclosure;
FIG. 8 is a diagram of a specific scenario for constructing optimization edges according to an embodiment of the present disclosure;
FIG. 9 is a logical diagram based on FIG. 2 according to an embodiment of the present disclosure;
FIG. 10 is a structural diagram of an apparatus for generating a global map vector segment according to an embodiment of the present disclosure;
FIG. 11 is a structural diagram of an electronic device according to an embodiment of the present disclosure.

### DETAILED DESCRIPTION

To make the objectives, technical solutions, and advantages of the embodiments of the present disclosure clearer, the following clearly and completely describes the technical solutions of the present disclosure with reference to the accompanying drawings in the embodiments of the present disclosure. Obviously, the described embodiments are some, but not all, embodiments of the technical solution of the present disclosure. All other embodiments obtained by a person of ordinary skill in the art based on the embodiments described in the present disclosure without creative efforts shall fall within the protection scope of the technical solutions of the present disclosure.

It should be noted that "a plurality of" in the descriptions of the present disclosure is understood as "at least two". "And/or" describes an association relationship of associated objects, indicating that three relationships may exist, for example, A and/or B may indicate three cases: A exists alone, both A and B exist, and B exists alone. A is connected to B, which may indicate two cases: A is directly connected to B and A is connected to B by C. In addition, in the descriptions of the present disclosure, terms such as "first" and "second" are merely used for distinguishing between descriptions, and shall not be understood as an indication or implication of relative importance or an indication or implication of a sequence.

With the rapid development of intelligent driving technologies, a HD Map, as a key to determining whether the intelligent driving technology can be implemented, has become an important research direction in the field of intelligent driving.

Currently, a mainstream high-definition map generation method includes: obtaining world coordinates corresponding to a vehicle perception result (i.e., a local perception result) by using a timestamp, and then generating a perception map result (i.e., a global map vector segment) in a world coordinate system based on the vehicle perception result and the corresponding world coordinates, to generate a corresponding high-definition map by fusing obtained perception map results by using a preset fusion algorithm.

However, by using the above method for generating the global map vector segments, the vehicle perception result is optimized based on the coordinate point, resulting in a large amount of data participating in the operation and low optimization efficiency; and since the world coordinate and the vehicle perception result are used for mapping, the probability of introducing the world coordinate error is large, so the accuracy of the generated global map vector segment cannot be ensured under the influence of the world coordinate error.

In view of this, in the embodiments of the present disclosure, in order to improve the generation efficiency of the global map vector segment and improve the accuracy of the generated global map vector segment to a certain extent, a method for generating a global map vector segment is provided, which specifically includes: obtaining global pose data and local map data of a vehicle in a target scene, the global pose data includes global poses of the vehicle in a standard coordinate reference system, the local map data includes local map vector segments, and each local map vector segment includes at least one local pose of the vehicle in a local coordinate reference system; then, performing pose matching on the local map vector segments based on the global poses and global timestamps respectively corresponding to the global poses, to obtain a respective pose matching pair sequence for each of the local map vector segments; furthermore, determining a respective target transformation matrix corresponding to each of the local map vector segments based on the obtained pose matching pair sequences, for each target transformation matrix, the target transformation matrix is configured to ensure that a pose coincidence degree between at least one candidate global pose and at least one target global pose meets a set pose coincidence requirement; the at least one candidate global pose corresponds to the at least one local pose in the local map vector segment corresponding to the target transformation matrix; the at least one target global pose is among the global poses and corresponds to the at least one local pose; and the at least one candidate global pose is obtained by transforming the at least one local pose in the local map vector segment corresponding to the target transformation matrix into the standard coordinate reference system; and finally, acquiring a respective global map vector segment corresponding to each of the local map vector segments based on the local map vector segments and target transformation matrices respectively corresponding to the local map vector segments.

In particular, the preferred embodiments of the present application are described below with reference to the accompanying drawings, and it should be understood that the preferred embodiments described herein are only used to illustrate and explain the present application, and are not used to limit the present application. In addition, the embodiments of the present disclosure and features in the embodiments may be combined with each other without conflict.

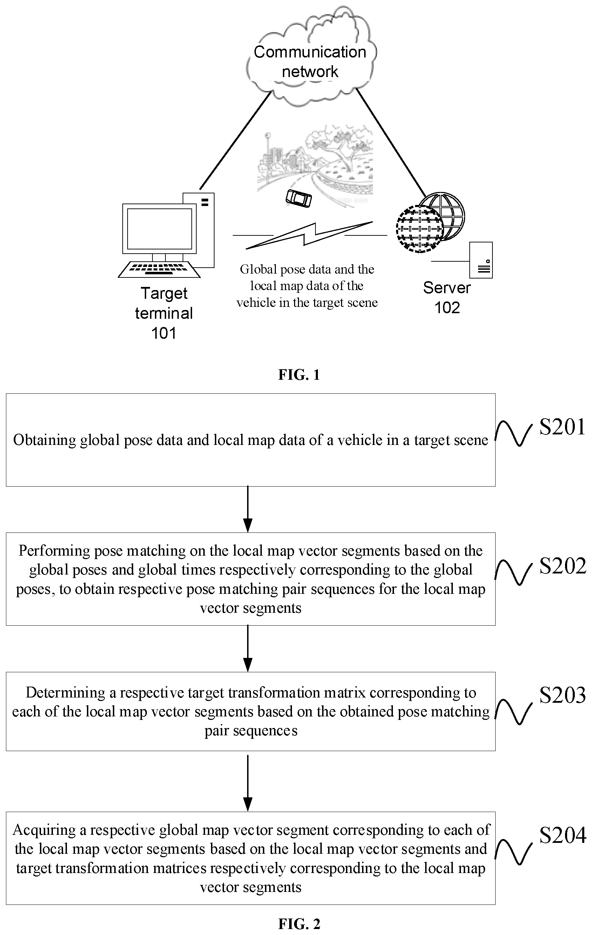

Referring to FIG. 1, which is a system architecture diagram applicable to an embodiment of the present disclosure, and the system architecture includes a target terminal 101 and a server 102. The target terminal 101 and the server 102 may exchange information through a communication network, where the communication mode adopted by the communication network may include: a wireless communication mode and a wired communication mode.

For example, the target terminal 101 may access a network by using a cellular mobile communication technology to communicate with the server 102, where the cellular mobile communication technologies include, e.g., the 5th generation mobile networks (5G) technology.

In some embodiments, the target terminal 101 may access a network in a short-range wireless communication manner to communicate with the server 102, where the short-range wireless communication manner includes, e.g., a wireless fidelity (Wi-Fi) technology.

The embodiment of the present disclosure does not limit the quantity of communication devices involved in the above system architecture. For example, the system architecture may include a plurality of target terminals, or there is no target terminal, or may further include another network device. As illustrated in FIG. 1, only the target terminal 101 and the server 102 are described as an example, and the above devices and their respective functions are briefly described below.

The target terminal 101 is a device that can provide voice and/or data connectivity for a user, and may be a device that supports a wired and/or wireless connection manner.

For example, the target terminal 101 includes but is not limited to a mobile phone, a tablet computer, a notebook computer, a palmtop computer, a mobile Internet device (MID), a wearable device, a virtual reality (VR) device, an augmented reality (AR) device, a wireless terminal device in industrial control, a wireless terminal device in autonomous driving, a wireless terminal device in a smart grid, a wireless terminal device in transportation safety, a wireless terminal device in a smart city, a wireless terminal device in a smart home, etc.

In addition, a related client may be installed on the target terminal 101, and the client may be software, for example, an application (APP), a browser, or short video software, or may be a web page or an applet. It should be noted that, in this embodiment of the present disclosure, the target terminal 101 may be the foregoing client related to generation of the global map vector segment, and send the global pose data and the local map data of the vehicle in the target scenario to the server 102, to perform subsequent method steps such as generating a global map vector segment.

The server 102 may be an independent physical server, or may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

It should be noted that, in the embodiments of the present disclosure, the server 102 is configured to obtain global pose data and local map data of a vehicle in a target scene; then, perform pose matching on the local map vector segments based on the global poses and global timestamps respectively corresponding to the global poses, to obtain respective pose matching pair sequences for the local map vector segments; furthermore, determine a respective target transformation matrix corresponding to each of the local map vector segments based on the obtained pose matching pair sequences; and finally, acquire a respective global map vector segment corresponding to each of the local map vector segments based on the local map vector segments and target transformation matrices respectively corresponding to the local map vector segments.

The method for generating a global map vector segment provided by an exemplary embodiment of the present disclosure will be described below with reference to the above system architecture and with reference to the accompanying drawings, it should be noted that the above system architecture is shown only for the convenience of understanding the spirit and principle of the present disclosure, and the embodiment of the present disclosure is not limited in this regard.

Referring to FIG. 2, which is an implementation flowchart of a method for generating a global map vector segment according to an embodiment of the present disclosure, an execution body is a server as an example, and a specific implementation flow of the method includes the following steps S201-S204.

S201: obtaining global pose data and local map data of a vehicle in a target scene.

The global pose data includes global poses of the vehicle in a standard coordinate reference system, the local map data includes local map vector segments, and each local map vector segment includes at least one local pose of the vehicle in a local coordinate reference system. It should be noted that the standard coordinate reference system is a world coordinate system.

It should also be noted that the global pose data may be data including a global timestamp (i.e., a global timestampstamp / global timestamp identifier) and a global pose (i.e., a global positioning pose) obtained by on-vehicle positioning algorithm; the local map vector segment may be local map information of a fixed mileage length, obtained by on-vehicle reconstruction algorithm, including a local timestamp (i.e., a local timestampstamp / local timestamp identifier), a trajectory (i.e., a local pose / local positioning pose), and various traffic elements.

For example, the foregoing types of traffic elements include but are not limited to: a target object, a vehicle, and a road, where the target object includes a driver, a pedestrian, a passenger, etc.; the vehicle includes a motor vehicle, a non-motor vehicle, etc.; and the road includes a highway, an urban road, an entryexit road, related facilities and environments thereof, an off-road landscape, a management facility, a climate condition, etc.

In some embodiments, specific forms of the global pose and the local pose may be represented as follows: $\left[\begin{matrix}R & h \\ 0 & 1\end{matrix}\right]$
where the form of R is: $\left[\begin{matrix}{r}_{0}^{0} & {r}_{0}^{1} & {r}_{0}^{2} \\ {r}_{1}^{0} & {r}_{1}^{1} & {r}_{1}^{2} \\ {r}_{2}^{0} & {r}_{2}^{1} & {r}_{2}^{2}\end{matrix}\right]$ representing the rotation information, $\left[\begin{matrix}{r}_{0}^{0} \\ {r}_{1}^{0} \\ {r}_{2}^{0}\end{matrix}\right] , \left[\begin{matrix}{r}_{0}^{1} \\ {r}_{1}^{1} \\ {r}_{2}^{1}\end{matrix}\right]$ and $\left[\begin{matrix}{r}_{0}^{2} \\ {r}_{1}^{2} \\ {r}_{2}^{2}\end{matrix}\right]$ represent rotation vectors on the X-axis, Y-axis and Z-axis respectively; the form of *h* is: $\left[\begin{matrix}{h}_{0} \\ {h}_{1} \\ {h}_{2}\end{matrix}\right]$ represents the translation information, and *h*₀, *h*₁ and *h*₂ represent offsets on the X-axis, Y-axis and Z-axis respectively.

S202: performing pose matching on the local map vector segments based on the global poses and global timestamps respectively corresponding to the global poses, to obtain a respective pose matching pair sequence for each of the local map vector segments.

In an implementation, when performing step S202, after the global pose data and the local map data of the vehicle in the target scene are obtained, the server may perform, for any one local map vector segment of the local map vector segments, the following operations including: obtaining at least one local timestamp respectively corresponding to the at least one local pose in the local map vector segment; and for each local timestamp, if a global timestamp among the global timestamps is the same as the local timestamp, determining the global pose and the local pose respectively corresponding to the local timestamp as a pose matching pair. In this way, all the global pose and the local pose with the same timestamp (the global timestamp is the same as the local timestamp) can be successfully paired.

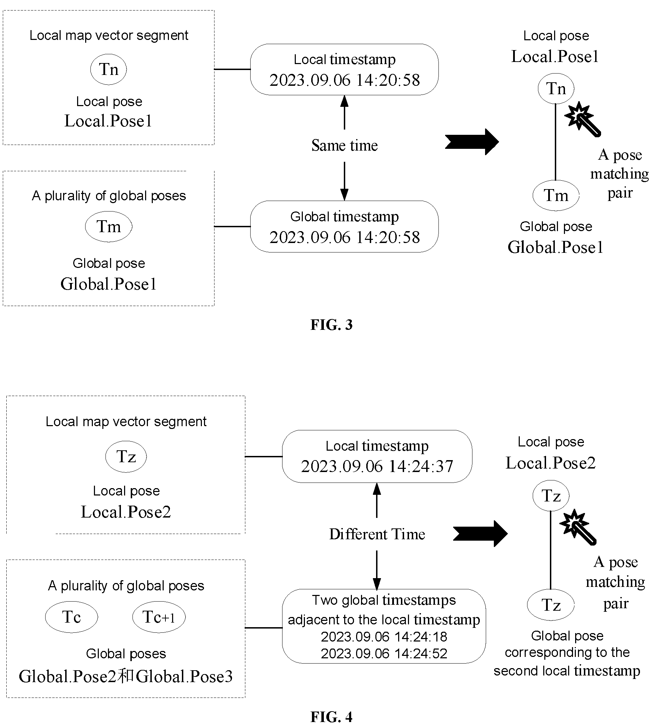

Exemplarily, referring to FIG. 3, assuming that the local timestamp corresponding to a certain local pose (e.g., Local.Pose1) in the local map vector segment is 2023.09.06 14:20:58, and there is also a global pose (e.g., Global.Pose1 or World.Pose1) with a global timestamp of 2023.09.06 14:20:58 in the global poses, the server may determine that in the obtained at least one local timestamp, there is a local timestamp (e.g., 2023.09.06 14:20:58) which is the same as the global timestamp in the global timestamps, so the local pose Local.Pose1 and the global pose Global.Pose1 may be determined as a pose matching pair.

In some embodiments, for each local timestamp, if none of the global timestamps is the same as the local timestamp, two global timestamps adjacent to the local timestamp are obtained from the global timestamps; based on the two global timestamps, global poses respectively corresponding to the two global timestamps, and the local timestamp, a global pose corresponding to the local timestamp is obtained, and the global pose and the local pose respectively corresponding to the local timestamp are determined as a pose matching pair. In this way, it is ensured that all local poses can be matched to global poses.

Exemplarily, referring to FIG. 4, it is assumed that the local timestamp corresponding to a certain local pose (e.g., Local.Pose2) in the local map vector segment is: 2023.09.06 14:24:37, and in the global poses, there are only a global pose (e.g., Global.Pose2) whose global timestamp is: 2023.09.06 14:24:18 and a global pose (e.g., Global.Pose3) whose global timestamp is 2023.09.06 14:24:52 that are adjacent to the local timestamp. Therefore, after the server determines that in the at least one local timestamp, there is a local timestamp (e.g., 2023.09.06 14:24:37) different from the global timestamps, and obtains two global timestamps (i.e., 2023.09.06 14:24:18 and 2023.09.06 14:24:52) that are adjacent to the local timestamp (i.e., 2023.09.06 14:24:37), the server may obtain a global pose corresponding to the local timestamp based on the two global timestamps and their respective corresponding global poses (i.e., Global.Pose2 and Global.Pose3) and the local timestamp, and determine the global pose and the local pose corresponding to the local timestamp as a pose matching pair.

Specifically, the global pose corresponding to the local timestamp may be computed in the following manner: $T = \frac{{t}_{1}^{ins} - {t}_{0}^{ndm}}{{t}_{1}^{ins} - {t}_{0}^{ins}} ∗ {T}_{0}^{ins} + \frac{{t}_{0}^{ndm} - {t}_{0}^{ins}}{{t}_{1}^{ins} - {t}_{0}^{ins}} ∗ {T}_{1}^{ins}$

*T* represents pose information obtained by interpolating the global poses based on timestamp (i.e., global timestamp and local timestamp), i.e., a global pose corresponding to local timestamp ${t}_{0}^{ndm} , {t}_{0}^{ins}$ and ${t}_{1}^{ins}$ are two global timestamps adjacent to local timestamp ${t}_{0}^{ndm} , {t}_{1}^{ins}$ is later than ${t}_{0}^{ins} , {T}_{0}^{ins}$ represents a local pose corresponding to global timestamp ${t}_{0}^{ins}$, and ${T}_{1}^{ins}$ represents a local pose corresponding to global timestamp ${t}_{1}^{ins}$.

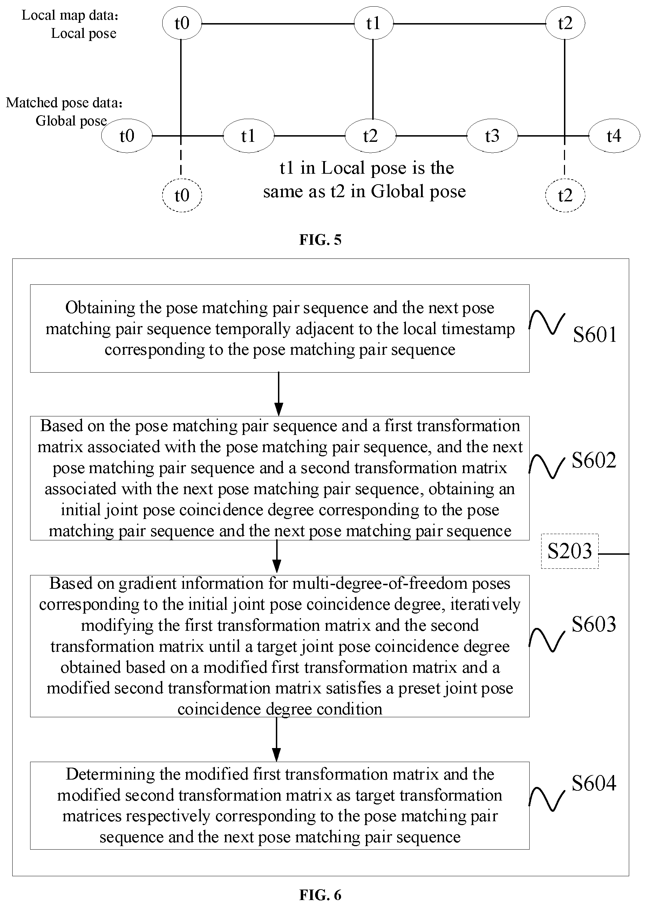

Based on the above manner, referring to FIG. 5, even if the frequencies (the respective clocks of the global timestamp and the local timestamp) are different, and the timestamps (i.e., the global timestamp and the local timestamp) of the two cannot be completely identical, i.e., there is no global timestamp that is the same as the local timestamp, the global pose corresponding to the pose at each moment (i.e., each local pose) in the local map vector segment can also be obtained, i.e., the local pose in the local map vector segment can be associated with the global pose in the global positioning data through the timestamps (i.e., the global timestamp and the local timestamp).

It should also be noted that at least one pose matching pair in each pose matching pair sequence is arranged in a sequential order of local timestamp, i.e., the earlier the local timestamp is, the closer it is to the sequence head of the pose matching pair sequence; on the contrary, the later the local timestamp is, the closer it is to the sequence tail of the pose matching pair sequence.

S203: determining a respective target transformation matrix corresponding to each of the local map vector segments based on the obtained pose matching pair sequences.

For each target transformation matrix, the target transformation matrix is configured to ensure that a pose coincidence degree between at least one candidate global pose and at least one target global pose meets a set pose coincidence requirement; the at least one candidate global pose corresponds to the at least one local pose in the local map vector segment corresponding to the target transformation matrix; the at least one target global pose is among the global poses and corresponds to the at least one local pose, where the at least one candidate global pose is obtained by transforming the at least one local pose in the local map vector segment corresponding to the target transformation matrix into the standard coordinate reference system. For example, the specified pose coincidence degree requirement may be that: after the at least one local pose is converted to a global pose in the standard coordinate reference system, a pose coincidence degree between the at least one candidate global pose and the at least one global pose corresponding to the at least one local pose in the global poses is greater than a specified pose coincidence degree threshold.

In an implementation, referring to FIG. 6, when performing step S203, after the pose matching pair sequences are obtained, the server may perform the following operations S601-S604 for any one pose matching pair sequence in the pose matching pair sequences.

S601: Obtaining the pose matching pair sequence and the next pose matching pair sequence temporally adjacent to the local timestamp corresponding to the pose matching pair sequence.

Specifically, when performing step S601, after obtaining the pose matching pair sequence, the server may select, from the pose matching pair sequences based on the local timestamp range corresponding to the pose matching pair sequence, a next pose matching pair sequence temporally adjacent to the local timestamp corresponding to the pose matching pair sequence.

S602: based on the pose matching pair sequence and a first transformation matrix associated with the pose matching pair sequence, and the next pose matching pair sequence and a second transformation matrix associated with the next pose matching pair sequence, obtaining an initial joint pose coincidence degree corresponding to the pose matching pair sequence and the next pose matching pair sequence.

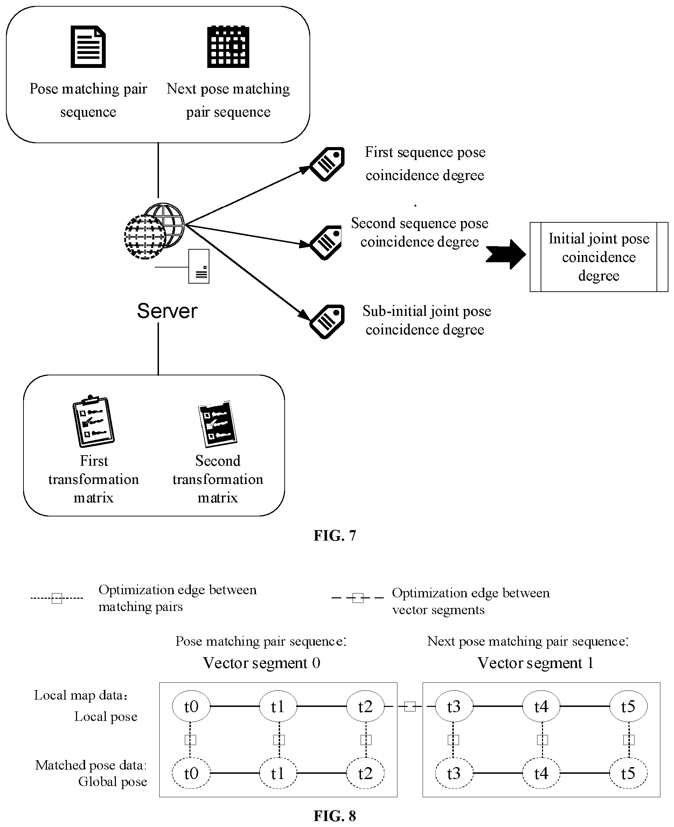

In an implementation, referring to FIG. 7, when performing step S602, after obtaining the pose matching pair sequence and the next pose matching pair sequence, the server may: based on pose matching pairs included in the pose matching pair sequence and the first transformation matrix, obtain a first sequence pose coincidence degree; and based on pose matching pairs included in the next pose matching pair sequence and the second transformation matrix, obtain a second sequence pose coincidence degree; then, based on the local pose of the sequence tail in the pose matching pair sequence, the local pose of the sequence head in the next pose matching pair sequence, the first transformation matrix, and the second transformation matrix, obtain a sub-initial joint pose coincidence degree; and finally, based on the first sequence pose coincidence degree, the second sequence pose coincidence degree, and the sub-initial joint pose coincidence degree, obtain the initial joint pose coincidence degree.

In some embodiments, a computation formula of the initial joint pose coincidence degree may be expressed as follows: $\begin{matrix}Error = {\sum }_{0}^{n - 1} Δ {T}_{0} ∗ {T}_{i}^{ndm} ∗ inv \left({T}_{i}^{ins}\right) + {\sum }_{n}^{m} Δ {T}_{1} ∗ {T}_{j}^{ndm} ∗ inv \left({T}_{j}^{ins}\right) + \\ Δ {T}_{0} ∗ {T}_{n - 1}^{ndm} ∗ inv \left(Δ{T}_{1}∗{T}_{n}^{ndm}\right) ∗ inv \left({T}_{n - 1}^{ndm}∗inv\left({T}_{n}^{ndm}\right)\right)\end{matrix}$

*Error* represents the initial joint pose coincidence degree, ${\sum }_{0}^{n - 1} Δ {T}_{0} ∗ {T}_{i}^{ndm} ∗ inv \left({T}_{i}^{ins}\right)$ represents the first sequence pose coincidence degree, ${\sum }_{n}^{m} Δ {T}_{1} ∗ {T}_{i}^{ndm} ∗ inv \left({T}_{i}^{ins}\right)$ represents the second sequence pose coincidence degree, $Δ {T}_{0} ∗ {T}_{n - 1}^{ndm} ∗ inv \left(Δ{T}_{1}∗{T}_{n}^{ndm}\right) ∗ inv \left({T}_{n - 1}^{ndm}∗inv\left({T}_{n}^{ndm}\right)\right)$ represents the sub-initial joint pose coincidence degree, Δ*T*₀ represents the first transformation matrix, ${T}_{i}^{ndm}$ represents the local pose of the ith pose matching pair (i.e., at the *tᵢ* moment) in the pose matching pair sequence containing the *n* quantity of pose matching pairs, ${T}_{i}^{ins}$ represents the global pose of the ith pose matching pair (i.e., at the *tᵢ* moment) in the pose matching pair sequence, *inv*() represents an inverse operation performed on a matrix, for example, $inv \left({T}_{i}^{ins}\right)$ is an inverse matrix of ${T}_{i}^{ins}$, Δ*T*₁ represents the second transformation matrix, ${T}_{j}^{ndm}$ represents the local pose of the *j*th pose matching pair (i.e., at the *tⱼ* moment) in the next pose matching pair sequence containing the (*m* - *n*) quantity of pose matching pairs, ${T}_{j}^{ins}$ represents the global pose of the *j*th pose matching pair (i.e., at the *tⱼ* moment) in the next pose matching pair sequence, ${T}_{n - 1}^{ndm}$ represents the local pose of the *n*th pose matching pair (i.e., at the *t*_{*n*-1} moment) in the pose matching pair sequence, i.e., the local pose of the sequence tail in the pose matching pair sequence, ${T}_{n}^{ndm}$ represents the local pose of the 1th pose matching pair (i.e., at the *tₙ* moment) in the next pose matching pair sequence, i.e., the local pose of the sequence head in the next pose matching pair sequence.

It should be noted that the forms of the first transformation matrix Δ*T*₀ and the second transformation matrix Δ*T*₁ share the same matrix form as the global poses and the local poses, and are initialized as identity matrices. Furthermore, multiplying the transformation matrix (i.e., the first transformation matrix / the second transformation matrix) by the local pose, and then multiplying by an inverse matrix of the global pose corresponding to the local pose, provides a measure of a pose coincidence degree between the transformed local pose (after being transformed into the standard coordinate reference system by the transformation matrix) and the global pose corresponding to the local pose .

Based on the initial joint pose coincidence degree obtaining manner recorded in S602, referring to FIG. 8, after obtaining the pose matching pair sequence and the next pose matching pair sequence through matching, the server may construct an optimization edge between pose matching pairs. In addition, an optimization edge between the local map vector segments may be constructed based on a pose relationship between the local map vector segments. It should be noted that the initial joint pose coincidence degree obtaining manner is an optimization function constructed based on the optimization graph illustrated in FIG. 8. Therefore, the first sequence pose coincidence degree may be considered as a measurement of an optimization edge in the pose matching sequence, the second sequence pose coincidence degree may be considered as a measurement of an optimization edge in the next pose matching sequence, and the sub-initial joint pose coincidence degree may be considered as a measurement of an optimization edge between the local pose of the sequence tail in the pose matching pair sequence and the local pose of the sequence head in the next pose matching pair sequence.

It should also be noted that the function output value of the optimization function may be a matrix of 1×6, where 6 is the quantity of degrees of freedom of the pose.

S603: based on gradient information for multi-degree-of-freedom poses corresponding to the initial joint pose coincidence degree, iteratively modifying the first transformation matrix and the second transformation matrix until a target joint pose coincidence degree obtained based on a modified first transformation matrix and a modified second transformation matrix satisfies a preset joint pose coincidence degree condition.

The above gradient information for a multi-degree-of-freedom pose is gradient information for six degrees of freedom related to the pose, and the six degrees of freedom include three degrees of freedom for displacement (i.e., translational displacement) and three degrees of freedom for spatial rotation, i.e., displacement and spatial rotation along the X-axis, Y-axis, and Z-axis directions.

In an implementation, in the process of iteratively modifying the first transformation matrix and the second transformation matrix based on gradient information for multi-degree-of-freedom poses corresponding to the initial joint pose coincidence degree, if for each of the multi-degree-of-freedom poses, the multi-degree-of-freedom pose falls within pose intervals associated with the multi-degree-of-freedom pose, the server may determine that the target joint pose coincidence degree satisfies the joint pose coincidence degree condition, where each pose interval is set according to gradient information for a respective degree of freedom of a pose.

S604: determining the modified first transformation matrix and the modified second transformation matrix as target transformation matrices respectively corresponding to the pose matching pair sequence and the next pose matching pair sequence.

Based on the method steps described in S603~S604, after the optimization function is obtained, a derivative of the optimization function is obtained, a derivative function of the optimization function with respect to each degree of freedom in the pose information (i.e., gradient information for the pose with multiple degrees of freedom) is obtained, and then the optimization function is iteratively optimized by using a graph optimization, for example, General Graph Optimization (G2O) library is to obtain a final transformation matrix (i.e., a target transformation matrix) between the local map vector segment and the next local map vector segment.

S204: acquiring a respective global map vector segment corresponding to each of the local map vector segments based on the local map vector segments and target transformation matrices respectively corresponding to the local map vector segments.

Specifically, when performing step S204, after determining the target transformation matrices respectively corresponding to the local map vector segments, the server may acquire a respective global map vector segment corresponding to each of the local map vector segments based on the local map vector segments and target transformation matrices respectively corresponding to the local map vector segments. For example, the conversion relationship between the local map vector segment and the global map vector segment may be represented as follows: ${T}^{ins} = Δ T ∗ {T}^{ndm}$

Δ*T* represents the target transformation matrix corresponding to the local map vector segment, *T^{ndm}* represents the local map vector segment, and *T^{ins}* represents the global map vector segment corresponding to the local map vector segment *T^{ndm}*.

Exemplarily, the server may update the trajectory and the traffic element target in the local map vector segment according to the obtained target transformation matrix, and the specific update formula is as follows: ${T}_{world} = Δ T ∗ {T}_{local}$ ${P}_{world} = Δ T ∗ {P}_{local}$

Δ*T* represents the target transformation matrix corresponding to the local map vector segment, T_{local} represents the pose information corresponding to the trajectory point in the local map vector segment, *T_{world}* represents the pose information corresponding to the trajectory point in the global map vector segment corresponding to the pose information T_{local} corresponding to the trajectory point in the local map vector segment, *P_{local}* represents the coordinate information of the point constituting the traffic element in the local map vector segment, and *P_{world}* represents the coordinate information of the point constituting the traffic element in the global map vector segment corresponding to the coordinate information *P_{local}* representing the coordinate information of the point constituting the traffic element in the local map vector segment.

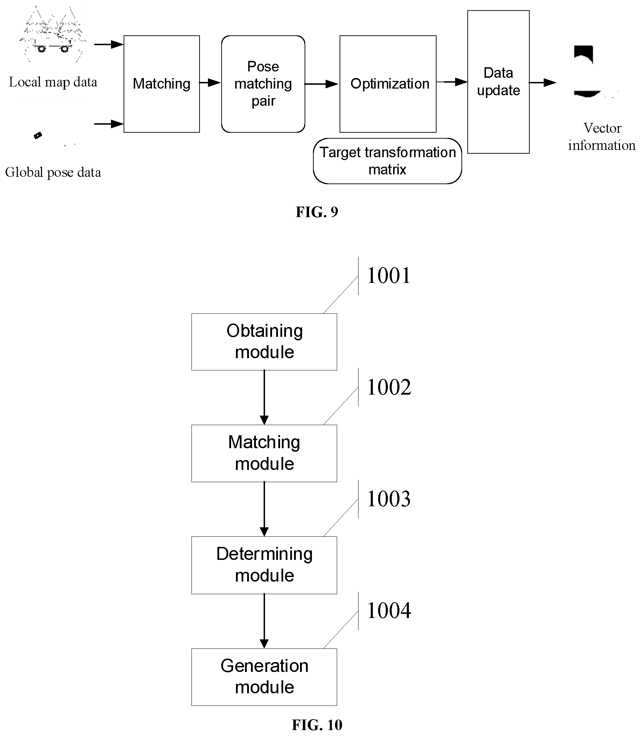

Based on the steps of the method for generating a global map vector segment described in S201~S204, referring to FIG. 9, the server may construct an optimization graph based on pose matching pairs obtained by means of timestamp interpolation and combining local map data and global pose data (i.e., global positioning pose); and then, in a process of iteratively optimizing the optimization graph, generate a transformation matrix (i.e., a target transformation matrix) that can describe coincidence between local poses and global poses, to implement fusion of two kinds of information (global information and local information), i.e., data update, to generate global vector segments (i.e., vector information) for a high-definition map.

It should be further noted that, in the foregoing manner, optimization is performed based on the information about the local map vector segment, so that an optimization computation amount of a target (i.e., a point, for example, a traffic element) and a trajectory (i.e., a line) is reduced, thereby improving optimization efficiency; and by using a correlation between the local map vector segments, the introduction of errors from a standard coordinate reference system (i.e., world coordinate) is mitigated.

In summary, in the method for generating a global map vector segment provided by the embodiment of the present application, the global pose data and the local map data of the vehicle in the target scene are obtained; then, pose matching is performed on the local map vector segments based on the global poses and global timestamps respectively corresponding to the global poses, to obtain a respective pose matching pair sequence for each of the local map vector segments; furthermore, a respective target transformation matrix corresponding to each of the local map vector segments is determined based on the obtained pose matching pair sequences; and finally, a respective global map vector segment corresponding to each of the local map vector segments is acquired based on the local map vector segments and target transformation matrices respectively corresponding to the local map vector segments

In this way, the global map vector segment is generated by using the information in the local map vector segment and the information between the local map vector segments (i.e., the target transformation matrix), which avoids the technical disadvantages in the related art that, the amount of data participating in the operation is large due to the optimization of the vehicle perception result based on the coordinate points, the optimization efficiency is low, and the accuracy of the generated global map vector segment cannot be ensured under the influence of the world coordinate error. Therefore, the efficiency and accuracy of generating the global map vector segment can be improved.

Further, based on a same technical concept, an embodiment of the present disclosure further provides an apparatus for generating a global map vector segment, and the apparatus for generating a global map vector segment is configured to implement a procedure of the foregoing method for generating a global map vector segment in the embodiments of the present disclosure. Referring to FIG. 10, the apparatus for generating a global map vector segment includes an obtaining module 1001, a matching module 1002, a determining module 1003, and a generation module 1004.

The obtaining module 1001 is configured to: obtain global pose data and local map data of a vehicle in a target scene, where the global pose data includes global poses of the vehicle in a standard coordinate reference system, the local map data includes local map vector segments, and each local map vector segment includes at least one local pose of the vehicle in a local coordinate reference system;

The matching module is configured to: pose matching on the local map vector segments based on the global poses and global timestamps respectively corresponding to the global poses, to obtain respective pose matching pair sequences for the local map vector segments.

The determining module 1003 is configured to: determine a respective target transformation matrix corresponding to each of the local map vector segments based on the obtained pose matching pair sequences, for each target transformation matrix, the target transformation matrix is configured to ensure that a pose coincidence degree between at least one candidate global pose and at least one target global pose meets a set pose coincidence requirement; the at least one candidate global pose corresponds to the at least one local pose in the local map vector segment corresponding to the target transformation matrix; the at least one target global pose is among the global poses and corresponds to the at least one local pose; and the at least one candidate global pose is obtained by transforming the at least one local pose in the local map vector segment corresponding to the target transformation matrix into the standard coordinate reference system.

The generation module 1004 is configured to: acquire a respective global map vector segment corresponding to each of the local map vector segments based on the local map vector segments and target transformation matrices respectively corresponding to the local map vector segments.

In an embodiment, when performing pose matching on the local map vector segments based on the global poses and global timestamps respectively corresponding to the global poses, the matching module 1002 is specifically configured to:
for each local map vector segment of the local map vector segments, perform the following operations including:
obtaining at least one local timestamp respectively corresponding to the at least one local pose in the local map vector segment; and
for each local timestamp, in response to determining that a global timestamp among the global timestamps is the same as the local timestamp, determining the global pose and the local pose respectively corresponding to the local timestamp as a pose matching pair.

In an embodiment, the matching module 1002 is further configured to:
in response to determining that none of the global timestamps is the same as the local timestamp, obtain two global timestamps adjacent to the local timestamp from the global timestamps; and
for each local timestamp, in response to determining that a global timestamp among the global timestamps is the same as the local timestamp, determine the global pose and the local pose respectively corresponding to the local timestamp as a pose matching pair.

In an embodiment, when determining a respective target transformation matrix corresponding to each of the local map vector segments based on the obtained pose matching pair sequences, the determining module 1003 is specifically configured to:
for each pose matching pair sequence of the pose matching pair sequences, perform the following operations including:
obtaining a next pose matching pair sequence temporally adjacent to a local timestamp corresponding to a sequence tail in the pose matching pair sequence;
based on the pose matching pair sequence and a first transformation matrix associated with the pose matching pair sequence, and the next pose matching pair sequence and a second transformation matrix associated with the next pose matching pair sequence, determining an initial joint pose coincidence degree corresponding to the pose matching pair sequence and the next pose matching pair sequence;
based on gradient information for multi-degree-of-freedom poses corresponding to the initial joint pose coincidence degree, iteratively modifying the first transformation matrix and the second transformation matrix until a target joint pose coincidence degree obtained based on a modified first transformation matrix and a modified second transformation matrix satisfies a preset joint pose coincidence degree condition; and
determining the modified first transformation matrix and the modified second transformation matrix as target transformation matrices respectively corresponding to the pose matching pair sequence and the next pose matching pair sequence.

In an embodiment, when based on the pose matching pair sequence and a first transformation matrix associated with the pose matching pair sequence, and the next pose matching pair sequence and a second transformation matrix associated with the next pose matching pair sequence, obtaining the initial joint pose coincidence degree corresponding to the pose matching pair sequence and the next pose matching pair sequence, the determining module 1003 is specifically configured to:
based on pose matching pairs included in the pose matching pair sequence and the first transformation matrix, obtain a first sequence pose coincidence degree; and based on pose matching pairs included in the next pose matching pair sequence and the second transformation matrix, obtain a second sequence pose coincidence degree;
based on the local pose of the sequence tail in the pose matching pair sequence, the local pose of the sequence head in the next pose matching pair sequence, the first transformation matrix, and the second transformation matrix, determining a sub-initial joint pose coincidence degree;
based on the first sequence pose coincidence degree, the second sequence pose coincidence degree, and the sub-initial joint pose coincidence degree, obtain the initial joint pose coincidence degree.

In an embodiment, determining that a target joint pose coincidence degree obtained based on a modified first transformation matrix and a modified second transformation matrix satisfies a preset joint pose coincidence degree condition in response to determining that the following condition is satisfied:
obtaining multi-degree-of-freedom poses respectively corresponding to the modified first transformation matrix and the modified second transformation matrix; and
if for each of the multi-degree-of-freedom poses, the multi-degree-of-freedom pose falls within pose intervals associated with the multi-degree-of-freedom pose, determining the target joint pose coincidence degree satisfies the joint pose coincidence degree condition, where each pose interval is set according to gradient information for a respective degree of freedom of a pose.

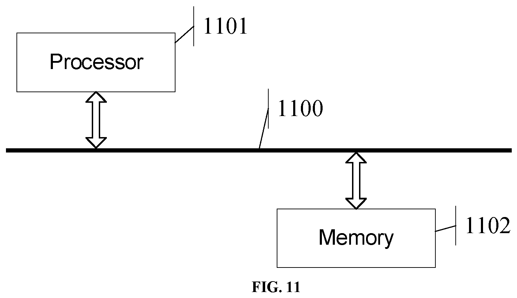

Based on a same technical concept, an embodiment of the present disclosure further provides an electronic device, and the electronic device may implement a procedure of the method for generating global map vector segments provided in the foregoing embodiment of the present disclosure. In an embodiment, the electronic device may be a server, a terminal device, or another electronic device. As illustrated in FIG. 11, the electronic device may include at least one processor 1101, and a memory 1102 connected to the at least one processor 1101.

A specific connection medium between the processor 1101 and the memory 1102 is not limited in this embodiment of the present disclosure, and an example in which the processor 1101 and the memory 1102 are connected by using the bus 1100 is used in FIG. 11. The bus 1100 is represented by a thick line in FIG. 11, and a connection manner between other components is merely an example for description, and is not limited thereto. The bus 1100 may be classified into an address bus, a data bus, a control bus, etc., and for ease of representation, only one thick line is used to represent the bus in FIG. 11, but it does not mean that there is only one bus or one type of bus. Alternatively, the processor 1101 may also be referred to as a controller, and a name is not limited.

In this embodiment of the present disclosure, the memory 1102 stores instructions executable by the at least one processor 1101, and the at least one processor 1101 may execute, by executing the instructions stored in the memory 1102, the method for generating a global map vector segment described above. The processor 1101 may implement functions of the modules in the apparatus illustrated in FIG. 10.

The processor 1101 serves as a control center of the apparatus, connecting various parts of the control device via various interfaces and lines. By running or executing instructions stored in a memory 1102 and calling data stored in the memory 1102, the processor implements various functions of the apparatus and processes data, thereby performing overall monitoring of the apparatus.

In a possible design, the processor 1101 may include one or more processing units, the processor 1101 may integrate an application processor and a modem processor, the application processor mainly processes an operating system, a user interface, an application program, etc, and the modem processor mainly processes wireless communication. It may be understood that the modem processor may alternatively not be integrated into the processor 1101. In some embodiments, the processor 1101 and the memory 1102 may be implemented on the same chip, or in some embodiments, they may be separately implemented on separate chips.

The processor 1101 may be a general-purpose processor, for example, a CPU, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in the embodiments of the present disclosure. The general-purpose processor may be a microprocessor, any conventional processor, etc. The steps of the method for generating a global map vector segment disclosed with reference to the embodiments of the present disclosure may be directly performed by a hardware processor, or may be performed by using a combination of hardware and software modules in the processor.

As a non-volatile computer-readable storage medium, the memory 1102 may be configured to store non-volatile software programs, non-volatile computer-executable programs and modules. The memory 1102 may include at least one type of storage medium, for example, may include a flash memory, a hard disk, a multimedia card, a card-type memory, a random access memory (RAM), a static random access memory (SRAM), a programmable read-only memory (PROM), a read-only memory (ROM), an electrically erasable programmable read-only memory (EEPROM), a magnetic memory, a magnetic disk, and an optical disk, and the like. The memory 1102 is any other medium that can be configured to carry or store expected program code in a form of an instruction or a data structure and that can be accessed by a computer, but is not limited thereto. The memory 1102 in this embodiment of the present disclosure may alternatively be a circuit or any other apparatus that can implement a storage function, and is configured to store program instructions and/or data.

By designing and programming the processor 1101, code corresponding to the method for generating a global map vector segment described in the foregoing embodiments may be solidified into the chip, so that the chip can perform the steps of the method for generating a global map vector segment in the embodiment illustrated in FIG. 2 when running. How to design and program the processor 1101 is a technology known to a person skilled in the art, and details are not described herein again.

Based on the same inventive concept, an embodiment of the present disclosure further provides a storage medium, where the storage medium stores computer instructions, and when the computer instructions are run on a computer, the computer is enabled to perform the foregoing method for generating a global map vector segment.

In some possible implementations, aspects of the method for generating a global map vector segment provided in the present disclosure may be further implemented in a form of a program product, including program code, where when the program product runs on an apparatus, the program code is configured to enable a control device to perform the steps in the method for generating a global map vector segment according to various example implementations of the present disclosure described in this specification.

A person skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. In addition, the present disclosure may use a form of a computer program product implemented on one or more computer-usable storage media (including but not limited to a disk memory, a CD- ROM, an optical memory, etc.) that include computer-usable program code.
the present disclosure is described with reference to flowcharts and/or block diagrams of the method, the device (system), and the computer program product according to the embodiments of the present disclosure. It will be understood that each process and/or block of the flowchart illustrations and/or block diagrams, and combinations of processes and/or blocks in the flowchart illustrations and/or block diagrams, can be implemented by computer program instructions. These computer program instructions may be provided to a general-purpose computer, a special-purpose computer, an embedded processor, or a processor of another programmable data processing device to generate a machine, so that the instructions executed by the computer or the processor of the another programmable data processing device generate an apparatus for implementing functions specified in one or more processes in the flowcharts and/or one or more blocks in the block diagrams.

These computer program instructions may also be loaded onto a computer or other programmable data processing devices to cause a series of operational steps to be performed on the computer or other programmable devices to produce computer-implemented processing, such that the instructions executed on the computer or other programmable devices provide steps for implementing the functions specified in one or more flows of the flowcharts and/or one or more blocks of the block diagrams.

Obviously, a person skilled in the art can make various modifications and variations to the present disclosure without departing from the spirit and scope of the present disclosure. The present disclosure is intended to cover these modifications and variations provided that they fall within the scope of protection defined by the following claims and their equivalent technologies.

## Claims

1. A method for generating a global map vector segment, comprising:
obtaining global pose data and local map data of a vehicle in a target scene, wherein the global pose data comprises global poses of the vehicle in a standard coordinate reference system, the local map data comprises local map vector segments, and each of the local map vector segments comprises at least one local pose of the vehicle in a local coordinate reference system;
performing pose matching on the local map vector segments based on the global poses and global timestamps respectively corresponding to the global poses, to obtain a respective pose matching pair sequence for each of the local map vector segments;
determining a respective target transformation matrix corresponding to each of the local map vector segments based on obtained pose matching pair sequences, wherein for each target transformation matrix, the target transformation matrix is configured to ensure that a pose coincidence degree between at least one candidate global pose and at least one target global pose meets a set pose coincidence requirement; the at least one candidate global pose corresponds to the at least one local pose in the local map vector segment corresponding to the target transformation matrix; the at least one target global pose is among the global poses and corresponds to the at least one local pose; and the at least one candidate global pose is obtained by transforming the at least one local pose in the local map vector segment corresponding to the target transformation matrix into the standard coordinate reference system; and
acquiring a respective global map vector segment corresponding to each of the local map vector segments based on the local map vector segments and target transformation matrices respectively corresponding to the local map vector segments.

2. The method according to claim 1, wherein performing pose matching on the local map vector segments based on the global poses and global timestamps respectively corresponding to the global poses comprises:
for each local map vector segment of the local map vector segments, performing following operations comprising:
obtaining at least one local timestamp respectively corresponding to the at least one local pose in the local map vector segment; and
for each local timestamp, in response to determining that a global timestamp among the global timestamps is the same as the local timestamp, determining the global pose and the local pose respectively corresponding to the local timestamp as a pose matching pair.

3. The method according to claim 2, further comprising:
in response to determining that none of the global timestamps is the same as the local timestamp, obtaining two global timestamps adjacent to the local timestamp from the global timestamps; and
based on the two global timestamps, global poses respectively corresponding to the two global timestamps, and the local timestamp, obtaining a global pose corresponding to the local timestamp, and determining the global pose and the local pose respectively corresponding to the local timestamp as a pose matching pair.

4. The method according to claim 1, wherein determining the respective target transformation matrix corresponding to each of the local map vector segments based on the obtained pose matching pair sequences comprises:
for each pose matching pair sequence of the pose matching pair sequences, performing following operations comprising:
obtaining a next pose matching pair sequence temporally adjacent to a local timestamp corresponding to a sequence tail in the pose matching pair sequence;
based on the pose matching pair sequence and a first transformation matrix associated with the pose matching pair sequence, and the next pose matching pair sequence and a second transformation matrix associated with the next pose matching pair sequence, obtaining an initial joint pose coincidence degree corresponding to the pose matching pair sequence and the next pose matching pair sequence;
based on gradient information for multi-degree-of-freedom poses corresponding to the initial joint pose coincidence degree, iteratively modifying the first transformation matrix and the second transformation matrix until a target joint pose coincidence degree obtained based on a modified first transformation matrix and a modified second transformation matrix satisfies a preset joint pose coincidence degree condition; and
determining the modified first transformation matrix and the modified second transformation matrix as target transformation matrices respectively corresponding to the pose matching pair sequence and the next pose matching pair sequence.

5. The method according to claim 4, wherein based on the pose matching pair sequence and a first transformation matrix associated with the pose matching pair sequence, and the next pose matching pair sequence and a second transformation matrix associated with the next pose matching pair sequence, obtaining the initial joint pose coincidence degree corresponding to the pose matching pair sequence and the next pose matching pair sequence comprises:
based on pose matching pairs comprised in the pose matching pair sequence and the first transformation matrix, obtaining a first sequence pose coincidence degree; and based on pose matching pairs comprised in the next pose matching pair sequence and the second transformation matrix, obtaining a second sequence pose coincidence degree;
based on a local pose of the sequence tail in the pose matching pair sequence, a local pose of a sequence head in the next pose matching pair sequence, the first transformation matrix, and the second transformation matrix, obtaining a sub-initial joint pose coincidence degree; and
based on the first sequence pose coincidence degree, the second sequence pose coincidence degree, and the sub-initial joint pose coincidence degree, obtaining the initial joint pose coincidence degree.

6. The method according to claim 4, wherein determining that the target joint pose coincidence degree obtained based on a modified first transformation matrix and a modified second transformation matrix satisfies the preset joint pose coincidence degree condition in response to determining that following condition is satisfied:
obtaining multi-degree-of-freedom poses respectively corresponding to the modified first transformation matrix and the modified second transformation matrix; and
in response to determining that for each of the multi-degree-of-freedom poses, the multi-degree-of-freedom pose falls within pose intervals associated with the multi-degree-of-freedom pose, determining the target joint pose coincidence degree satisfies the joint pose coincidence degree condition, wherein each pose interval is set according to gradient information for a respective degree of freedom of a pose.

7. An apparatus for generating a global map vector segment, comprising:
an obtaining module, configured to: obtain global pose data and local map data of a vehicle in a target scene, wherein the global pose data comprises global poses of the vehicle in a standard coordinate reference system, the local map data comprises local map vector segments, and each local map vector segment comprises at least one local pose of the vehicle in a local coordinate reference system;
a matching module, configured to: pose matching on the local map vector segments based on the global poses and global timestamps respectively corresponding to the global poses, to obtain a respective pose matching pair sequence for each of the local map vector segments;
a determining module, configured to: determine a respective target transformation matrix corresponding to each of the local map vector segments based on obtained pose matching pair sequences, wherein for each target transformation matrix, the target transformation matrix is configured to ensure that a pose coincidence degree between at least one candidate global pose and at least one target global pose meets a set pose coincidence requirement; the at least one candidate global pose corresponds to the at least one local pose in the local map vector segment corresponding to the target transformation matrix; the at least one target global pose is among the global poses and corresponds to the at least one local pose; and the at least one candidate global pose is obtained by transforming the at least one local pose in the local map vector segment corresponding to the target transformation matrix into the standard coordinate reference system; and
a generation module, configured to: acquire a respective global map vector segment corresponding to each of the local map vector segments based on the local map vector segments and target transformation matrices respectively corresponding to the local map vector segments.

8. The apparatus according to claim 7, wherein when performing pose matching on the local map vector segments based on the global poses and global timestamps respectively corresponding to the global poses, the matching module is specifically configured to:
for each local map vector segment of the local map vector segments, perform following operations comprising:
obtain at least one local timestamp respectively corresponding to the at least one local pose in the local map vector segment; and
for each local timestamp, in response to determining that a global timestamp among the global timestamps is the same as the local timestamp, determine the global pose and the local pose respectively corresponding to the local timestamp as a pose matching pair.

9. The apparatus according to claim 8, wherein the matching module is further configured to:
in response to determining that none of the global timestamps is the same as the local timestamp, obtain two global timestamps adjacent to the local timestamp from the global timestamps; and
based on the two global timestamps, global poses respectively corresponding to the two global timestamps, and the local timestamp, obtain a global pose corresponding to the local timestamp, and determine the global pose and the local pose respectively corresponding to the local timestamp as a pose matching pair.

10. The apparatus according to claim 7, wherein when determining the respective target transformation matrix corresponding to each of the local map vector segments based on the obtained pose matching pair sequences, the determining module is specifically configured to:
for each pose matching pair sequence of the pose matching pair sequences, perform following operations comprising:
obtaining a next pose matching pair sequence temporally adjacent to a local timestamp corresponding to a sequence tail in the pose matching pair sequence;
based on the pose matching pair sequence and a first transformation matrix associated with the pose matching pair sequence, and the next pose matching pair sequence and a second transformation matrix associated with the next pose matching pair sequence, obtaining an initial joint pose coincidence degree corresponding to the pose matching pair sequence and the next pose matching pair sequence;
based on gradient information for multi-degree-of-freedom poses corresponding to the initial joint pose coincidence degree, iteratively modifying the first transformation matrix and the second transformation matrix until a target joint pose coincidence degree obtained based on a modified first transformation matrix and a modified second transformation matrix satisfies a preset joint pose coincidence degree condition; and
determining the modified first transformation matrix and the modified second transformation matrix as target transformation matrices respectively corresponding to the pose matching pair sequence and the next pose matching pair sequence.

11. The apparatus according to claim 10, wherein when based on the pose matching pair sequence and a first transformation matrix associated with the pose matching pair sequence, and the next pose matching pair sequence and a second transformation matrix associated with the next pose matching pair sequence, obtaining the initial joint pose coincidence degree corresponding to the pose matching pair sequence and the next pose matching pair sequence, the determining module is specifically configured to:
based on pose matching pairs comprised in the pose matching pair sequence and the first transformation matrix, obtain a first sequence pose coincidence degree; and based on pose matching pairs comprised in the next pose matching pair sequence and the second transformation matrix, obtain a second sequence pose coincidence degree;
based on a local pose of the sequence tail in the pose matching pair sequence, a local pose of a sequence head in the next pose matching pair sequence, the first transformation matrix, and the second transformation matrix, obtain a sub-initial joint pose coincidence degree; and
based on the first sequence pose coincidence degree, the second sequence pose coincidence degree, and the sub-initial joint pose coincidence degree, obtain the initial joint pose coincidence degree.

12. The apparatus according to claim 10, wherein determining that the target joint pose coincidence degree obtained based on a modified first transformation matrix and a modified second transformation matrix satisfies the preset joint pose coincidence degree condition in response to determining that following condition is satisfied:
obtaining multi-degree-of-freedom pose respectively corresponding to the modified first transformation matrix and the modified second transformation matrix; and
in response to determining that for each of the multi-degree-of-freedom poses, the multi-degree-of-freedom pose falls within pose intervals associated with the multi-degree-of-freedom pose, determining the target joint pose coincidence degree satisfies the joint pose coincidence degree condition, wherein each pose interval is set according to gradient information for a respective degree of freedom of a pose.

13. An electronic device, comprising: a memory, at least one processor, and a computer program stored on the memory and executable on the at least one processor, wherein the at least one processor implements the method according to any one of claims 1-6 when executing the computer program.

14. A computer-readable storage medium having a computer program stored thereon, wherein the computer program, when executed by at least one processor, implements the steps of the method according to any one of claims 1-6.
